# NEUE EUROPÄISCHE PATENTSCHRIFT

(11) **EP 0 242 519 B2**
(45) Veröffentlichungstag und Bekanntmachung des Hinweises auf die Entscheidung über den Einspruch: **19.08.1998**
(45) Hinweis auf die Patenterteilung: 24.07.1991
(21) Anmeldenummer: 87101988.1
(22) Anmeldetag: 12.02.1987
(51) Int. Cl.: B23D 51/02, B23D 49/16

(54) **Stichsäge**
Sabre saw
Scie sauteuse

(30) Priorität: 19.04.1986 DE 3613279
(43) Veröffentlichungstag der Anmeldung: 28.10.1987
(73) Patentinhaber: FESTO AG & Co, 73734 Esslingen (DE)
(72) Erfinder: Maier, Peter, Dipl.-Ing. (FH), D-7311 Neidlingen (DE); Simen, Rolf, Dipl.-Ing. (FH), D-7000 Stuttgart 80 (DE)
(74) Vertreter: Abel, Martin, Dipl.-Ing.

(56) Entgegenhaltungen:
- EP-A- 0 163 186
- US-A- 1 690 808
- US-A- 1 808 228
- US-A- 2 827 085
- US-A- 2 931 402
- US-A- 3 872 762
- US-A- 4 262 421
- US-A- 4 272 996

## Beschreibung

Die Erfindung betrifft eine Stichsäge gemäß Oberbegriff des Anspruches 1.

Derartige Stichsägen werden im Betrieb mit ihrer Laufsohle beispielsweise auf das zu bearbeitende Werkstück aufgesetzt und anschließend auf dem Werkstück verschoben, wobei das regelmäßig eine Hubbewegung ausführende Stichsägeblatt mit seinem Arbeitsabschnitt am Werkstück einen Materialabtrag vornimmt. Hierbei ist das Sägeblatt über die Führungseinrichtung, die im Bereich unmittelbar oberhalb der Laufsohle gegen die beiden Sägeblattflanken arbeitet, flächig seitlich geführt, so daß es am Verlaufen gehindert und vor Verkanten und Verbiegen geschützt ist. Man kann dadurch präzise Bearbeitungsvorgänge, insbesondere exakte Sägeschnitte, vornehmen.

Stichsägen dieser Art sind in der DE-A 34 20 442 bzw. der EP-A 016 3186 beschrieben. Ihre Führungseinrichtung, die im wesentlichen aus zwei seitlich an die Werkzeugflanke andrückenden Stabilisierungselementen besteht, ist fest am Sägetisch angebracht. Damit lassen sich zwar bei Geradeschnitten, bei denen das Sägeblatt in einer Ebene rechtwinklig zur Laufsohlenebene angeordnet ist, hervorragende Ergebnisse erzielen. Sollen allerdings Gehrungsschnitte durchgeführt werden, für deren Realisierung es erforderlich ist, daß die Antriebseinheit gegenüber dem Sägetisch um eine in Vorschubrichtung verlaufende Achse verschwenkt angeordnet ist, so daß die Werkzeug-Eingriffsebene nicht mehr rechtwinklig zur Laufsohlenebene verläuft, dann läßt die Führungsqualität entscheidend nach. Denn um Verspannungen zwischen Werkzeug und Führungseinrichtung, die zu Beschädigungen beider Teile führen könnten, auszuschließen, muß man die Führungseinrichtung sowohl beim Verschwenkvorgang als auch beim nachfolgenden Gehrungsschnitt-Arbeitsvorgang vom Werkzeug entfernen so daß in diesen Fällen keine seitliche Abstützung des Werkzeugs auf Höhe des Sägetisches erfolgt. Die Führungseinrichtung der bekannten Stichsäge ist also lediglich bei Geradeschnitten funktionsfähig, während bei Gehrungsschnitten die bekannten Nachteile üblicher, ohne Führungseinrichtung ausgestatteter Stichsägen, nämlich Verlaufen, Verkanten od.dgl., auftreten. Bei der in der US-A 29 31 402 gezeigten Stichsäge ist zwar eine mit einer verschwenkbaren Fußplatte verbundene Antriebseinheit zum Ausführen von Winkelschnitten vorgesehen, jedoch wird das Sägeblatt in diesem Falle weder beim Durchführen von geradlinig verlaufenden Schnitten, noch beim Ausführen von Gehrungsschnitten seitlich gut geführt, Stabilisierungselemente der im Oberbegriff des Anspruches 1 beschriebenen Art sind nämlich keine vorgesehen. Als einzige Führung ist in diesem Falle eine in großem Abstand vom Sägetisch angeordnete Führungsund Antriebsrolle, oder auch Pendelrolle bei mit Pendelhub ausgestalten Stichsägen genannt, vorgesehen, die mit einer Umfangsnut versehen ist, deren Nutgrund an der Rückseite des Sägeblattes anliegt und dieses z.B. pendelnd betätigt und die das Sägeblatt mit großem, weitem Spiel umfaßt, so daß sie praktisch keine seitliche Führung des Sägeblattes bewirkt.

Es ist demgegenüber Aufgabe der vorliegenden Erfindung, eine Stichsäge der eingangs genannten Art zu schaffen, bei der das Werkzeug sowohl bei der Durchführung von Geradschnitten als auch bei der Durchführung von Gehrungsschnitten sicher und zuverlässig geführt und dadurch am Verlaufen, Verkanten od.dgl. gehindert wird.

Die obige Aufgabe wird gelöst durch die kennzeichnenden Merkmale des Anspruches 1. Durch die verschwenkbare Anordnung der Führungseinrichtung läßt sich mit dieser ein Verschwenken der Antriebseinheit und insbesondere des von dieser getriebenen Werkzeugs unter sicherer seitlicher Führung so durchführen, daß Verspannungen und Verklemmungen od.dgl. zwischen diesen beiden Teilen ausgeschlossen sind und in jeder Verschwenkstellung eine beidseitige Flankenabstützung des Werkzeugs erfolgt. Damit können auch Gehrungsschnitte, bei denen die Werkstück-Eingriffsebene unter einem Winkel größer oder kleiner als 90° mit Bezug auf die Laufsohlenebene angeordnet ist, extakt durchgeführt- werden, ohne daß die Gefahr des Verlaufens oder Verkantens des Werkzeugs besteht. Vorteilhafterweise findet die seitliche Abstützung des Werkzeugs unabhängig von der jeweiligen Schwenkstellung im Bereich des Sägetisches und insbesondere unmittelbar oberhalb der Laufsohle statt, was eine werkstücknahe Stabilisierung zur Folge hat, die ein Verbiegen des Werkzeugs im Bereich seines Arbeitsabschnittes verhindert, da der einem seitlichen Einwirken von Kräften zur Verfügung stehende Hebelarm des Werkzeugs sehr kurz ist. Von Vorteil ist des weiteren, daß die mit dem Werkzeug in Abstützkontakt stehende Fläche der Führungseinrichtung sehr groß gewählt werden kann, da diese Flächen auch beim Verschwenken des Werkzeugs ihre parallele Lage mit Bezug auf die Werkzeugflanke beibehalten, so daß auch hier ohne Verkantungsgefahr eine sichere, flächige seitliche Führung vorhanden ist. Indem darüber hinaus die Schwenkachsen der Antriebseinheit und der Führungseinrichtung, die im übrigen nicht körperlich sein müssen, zusammenfallen oder parallel und mit Abstand zueinander angeordnet sind, lassen sich die Schwenkbewegungen beider Einheiten reibungslos miteinander koordinieren. All dies wird mit relativ geringem konstruktivem Aufwand erzielt.

Vorteilhafte Weiterbildungen der Erfindung sind in den Unteransprüchen aufgeführt.

So z.B. lassen sich bei den Weiterbildungen nach den Ansprüchen 2 bis 5 die von den Haltearmen getragenen Stabilisierungselemente unmittelbar in der Laufsohlennähe anorden, ohne dabei die Führungsqualität zu verringern. Die stabilen Haltearme sorgen dafür, daß sich die Stabilisierungselemente gut abstützen können, so daß auch eine unnachgiebige Fixierung für das Sägeblatt gegeben ist. Die Weiterbildung nach Anspruch 4 ermöglicht auch noch ein Verstellen der Stabilisierungselemente bzw. der Führungsflächen, so daß der auf das Werkzeug einwirkende Anpreßdruck variabel ist. Insgesamt ist auf einfache Weise Sorge dafür getragen, daß ein relativ großer Schwenkwinkel für die Antriebseinheit gewährleistet ist. Mit zunehmendem Verschwenkwinkel kann die Führungspartie des einen Haltearmes in die vorhandene Ausnehmung eintauchen, so daß Schwenkwinkel nach beiden Seiten in einer Größenordnung von ca. 45° möglich sind. Gleichzeitig können die Haltearme auch als Verschwenkbegrenzung dienen, indem sie in den Extremstellungen auf eine Partie des Sägetisches auflaufen.

Nachfolgend wird die Erfindung anhand der beiliegenden Zeichnung näher erläutert. In dieser zeigen:
- Fig. 1: eine erste Bauform der erfindungsgemäßen Stichsäge in Vorderansicht. wobei der Sägetisch teilweise aufgebrochen ist und wobei gestrichelt die Lage der Stichsäge in einem verschwenkten Zustand angedeutet ist,
- Fig. 2: eine Seitenansicht der Stichsäge aus Fig. 1 gemäß der Schnittlinie II-II aus Fig. 1.
- Fig. 3: einen Teil der bei der Stichsäge nach Fig. 1 und 2 verwendeten Führungseinrichtung in vergrößerter Darstellung und insbesondere einen Abschnitt eines Haltearms gemäß Schnittlinie III-III aus Fig. 4,
- Fig. 4: einen Schnitt durch den in Fig. 3 abgebildeten Haltearm gemäß Schnittlinie IV-IV aus Fig. 3,
- Fig. 5: eine weitere Ausführungsform der Führungseinrichtung in Vorderansicht und teilweise geschnitten, wobei lediglich eine Partie eines Haltearms und des Sägetisches abgebildet sind.
- Fig. 6: eine Seitenansicht der Weilerbildung nach Fig. 5 gemäß Ansicht VI aus Fig. 5 und
- Fig. 7: eine Untersicht der Führungseinrichtung nach den Fig. 5 und 6 gemäß Blickrichtung VII aus Fig. 6.

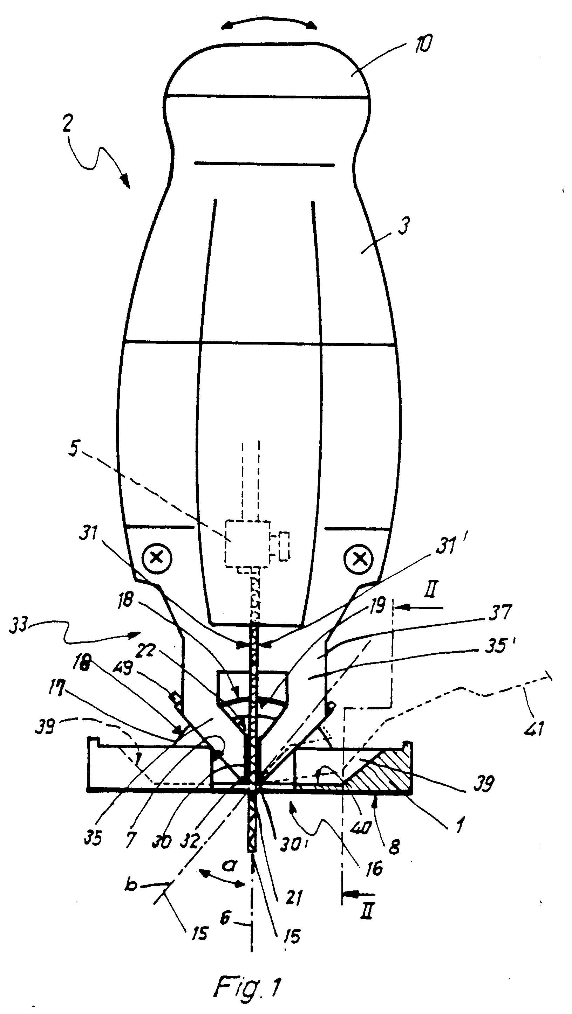

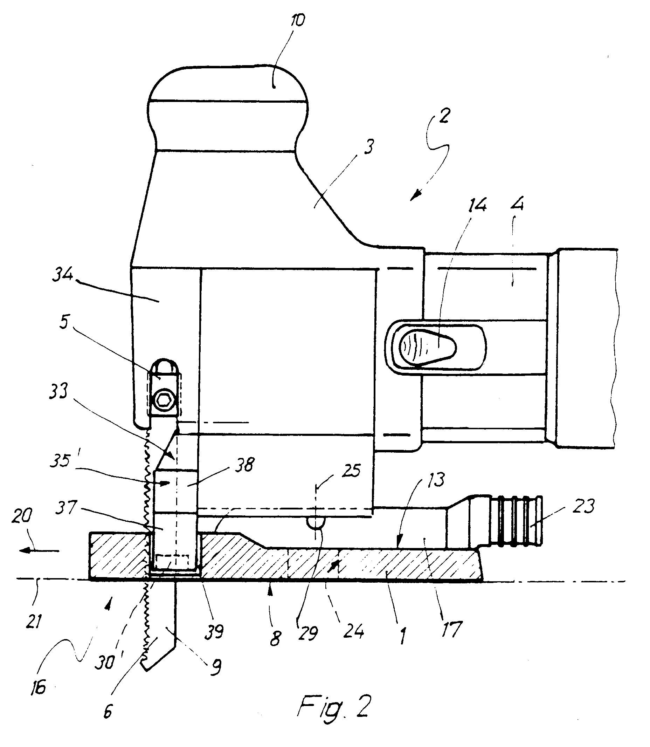

Unter Bezugnahme auf die Figuren 1 und 2 soll zunächst eine erste Ausführungsform der erfindungsgemäßen Stichsäge beschrieben werden. Diese besitzt einen Sägetisch 1, der eine Antriebseinheit 2 trägt, die sich im wesentlichen aus einem ein Antriebsaggregat enthaltenden Motorkopf 3 und einem daran angeflanschten Stabmotor 4 zusammensetzt. Die Antriebseinheit 2 treibt einen in ihrem vorderen Bereich angeordneten Werkzeughalter 5 in einer periodischen Auf- und Abbewegung an, an dem ein nach unten zum Sägetisch 1 hin ragendes Werkzeug 6 ein Stichsägeblatt, lösbar festgespannt ist. Dieses durchgreift eine Durchbrechung 7 des Sägetisches 1 von oben her und ragt mit einem Arbeitsabschnitt 9 an der Unterseite des Sägetisches 1 über dessen Laufsohle 8 vor. Letztere kann, wie beim Ausführungsbeispiel, unmittelbar am Sägetisch 1 vorgesehen sein, oder aber an einem von unten her an den Sägetisch angesetzten Laufbelag zur Schonung des Werkstückes (nicht dargestellt). Im Betrieb wird die Stichsäge überlicherweise mit der Laufsohle auf ein zu zersägendes Werkstück aufgesetzt. Man hält die Stichsäge mit einer Hand am Motorkopf 3, dessen obere Partie als Griffknauf 10 ausgebildet ist, und mit der anderen Hand am Gehäuse des Antriebsaggregates 4, an dem sich auch ein Schalter 14 zum Ein-/Ausschalten und gegebenenfalls zur Drehzahlregelung des Stabmotors 4 befindet. Die Stichsäge wird entsprechend der gewünschten Schnittlinie über das Werkstück geführt, wobei dieses vom Arbeitsabschnitt 9 des Sägeblattes 6 zersägt wird.

Die Antriebseinheit 2 und das von dieser getriebene Werkzeug 6 sind am Sägetisch diesem gegenüber verschwenkbar gelagert, so daß sich die Antriebseinheit, in Vorschubrichtung bzw. in Vorder- oder Rückansicht gesehen, seitlich verkippen läßt. In beliebigen Winkelstellungen bezüglich des Sägetisches 1 läßt sich die Antriebseinheit festlegen, und auf diese Weise können sowohl Geradschnitte, bei denen die Werkzeugebene 15 rechtwinkelig zur Laufsohlenebene und parallel zur Vorschubrichtung verläuft (in Fig. 1 bei a angedeutet), als auch Gehrungsschnitte, bei denen die Werkzeugebene 15 ebenfalls in Vorschubrichtung verläuft, aber schräg gegenüber der Laufsohlenebene angestellt ist (in Fig. 1 beispielhaft bei b angedeutet), durchgeführt werden. Des weiteren besitzt die Stichsäge eine Führungseinrichtung 16, die das Werkzeug 6 im Bereich des Sägetisches, zweckmäßigerweise auf dessen Höhe und insbesondere unmittelbar oberhalb der Laufsohle 8 seitlich von einander entgegengesetzten Seiten her abstützt. Diese Führungseinrichtung 16 ist in jeder Stellung des Werkzeuges 6. d. h. sowohl in Position a als auch in verschiedenen Schwenkpositionen (wie b), voll wirksam.

Die Verschwenkbarkeit der Antriebseinheit 2 gegenüber dem Sägetisch 1 wird beim Ausführungsbeispiel wie folgt realisiert. Auf der der Antreibseinheit zugewandten Oberseite 13 des Sägetisches 1 befindet sich ein hohlprofilförmiger Aufsatz 17, der einstückig an den Sägetisch angeformt ist. Er befindet sich im Längsmittenbereich des Sägetisches 1 und erstreckt sich in dessen Längsrichtung, die identisch mit der Vorschubrichtung 20 ist. Er erstreckt sich dabei vom Bereich der Sägetisch-Rückseite aus nach vorne bis unmittelbar vor die Durchbrechung 7 für das Werkzeug 6. Wie vor allem Fig. 1 gut zeigt, ist der Aufsatz 17 nach oben gewölbt, und seine Oberseite 18 ist als Mantelabschnitt eines Kreiszylinders konturiert, wobei die Winkelerstreckung in dem dargestellten Ausführungsbeispiel annähernd 180° beträgt.

Die Antriebseinheit 2 ist an ihrer Unterseite insbesondere im Bereich des Motorkopfes 3 ebenfalls mit einem gewölbten Abschnitt 19 versehen, dessen Krümmungsradius demjenigen der Oberseite 18 entspricht. Mit diesem Abschnitt 19 sitzt die Antriebseinheit 2 auf der Oberseite 18 des Aufsatzes 17 auf, wobei die Winkelerstreckung des Abschnittes 19 wesentlich kleiner ist als diejenige des Aufsatzes 17, so daß Spiel für eine Seitwärts-Schwenkbewegung besteht. Die Schwenkachse 21 für diese Schwenkbewegung ist hierbei durch die nicht körperliche Längsachse des zylindrischen Aufsatzes 17 vorgegeben, und sie verläuft beim Ausführungsbeispiel in Längsrichtung des Sägetisches 1 bzw. in Vorschubrichtung 20 der Stichsäge, und sie ist in der Laufsohlenebene angeordnet.

Der Aufsatz 17 ist innen hohl und besitzt an seinem dein Werkzeug 6 zugewandten Ende eine Ansaugöffnung 22 sowie an seinem rückwärtigen Ende einen Absaugstutzen 23, an den ein Absauggerät anschließbar ist, so daß durch den hohen Aufsatz 17 hindurch eine Staubabsaugung im Arbeitsbereich des Werkzeuges durchführbar ist. Auch der Sägetisch ist dabei zumindest teilweise hohl ausgebildet, und er besitzt an seiner Unterseite eine lediglich gestrichelt dargestellte verschließbare Öffnung 24, durch die man ein Schraubwerkzeug einführen kann, um eine den Aufsatz 17 mit dem Motorkopf 3 verbindende Klemmschraube 25 (in Fig. 2 strichpunktiert dargestellte) lösen oder festziehen zu können. Im gelösten Zustand läßt sich die Antriebseinheit 2 gegenüber dem Sägetisch 1 verschwenken, wobei der Abschnitt 19 auf der Oberseite 18 des Aufsatzes 17 entlanggleitet und wobei die Schwenkbewegung der Klemmschraube 25 durch einen in Umfangsrichtung des Aufsatzes 17 verlaufenden Schlitz 29 gewährleistet ist.

Es wäre nach anzumerken, daß es sich bei der soeben beschriebenen Art der Schwenklagerung um eine besonders vorteilhalte handelt, daß die vorliegende Erfindung jedoch auch bei anderen Arten von Schwenklagerungen vorteilhaft einsetzbar und nicht auf die hier beschriebene beschränkt ist.

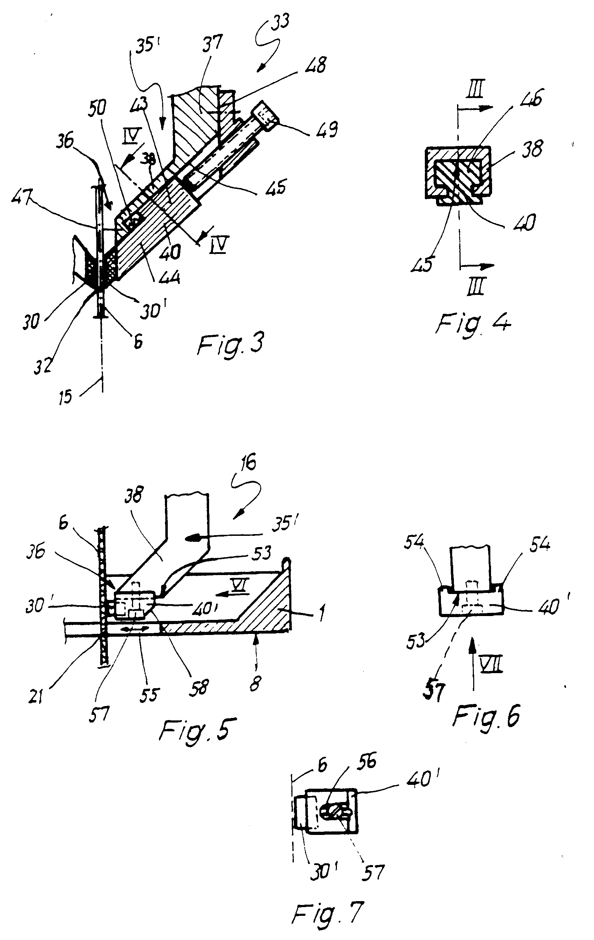

Die bereits oben kurz angesprochene Führungseinrichtung 16 besitzt zwei Stabilisierungselemente 30, 30', die auf entgegengesetzten Flankenseiten des Werkzeuges 6 angeordnet sind und deren den Werkzeugflanken bzw. Werkzeug-Seitenflächen 31, 31' zugewandte Oberflächen als Führungsflächen 32 ausgebildet sind (vgl. auch Fig. 3). Die Stabilisierungselement 30, 30' bzw. deren Führungsflächen 32 befinden sich auf Höhe des Sägetisches 1 im Bereich unmittelbar oberhalb der Laufsohle 8 und beaufschlagen das Werkzeug 6 seitlich an beiden Flanken 31, 31'. Dadurch ist das Werkzeug gegen eine mit Bezug auf die Vorschubrichtung gesehene Seitwärtsbewegung gesichert, so daß es bei der Bearbeitung exakt einer vorgegebenen Bearbeitungs-Soll-Linie folgt, ohne von dieser durch Verlaufen, Verkanten, Verbiegen od. dgl. abzuweichen.

Die beidseits gegen die Werkzeugflanken 31, 31' wirkenden Stabilisierungselemente 30, 30' besitzen im wesentlichen klotzartige Gestalt und bestehen aus einem thermisch hochbelastbaren, verschleißarmen Material, insbesondere aus einem Keramikmaterial wie Oxidkeramik.

Die Führungsflächen 32 sind vorzugsweise ebene Flächen insbesondere von rechteckigem Grundriß, und ihre Abmessungen betragen in Vorschubrichtung 20 ca. 6 - 8 mm und in Höhenrichtung ca. 4 mm. Dadurch ist das Werkzeug 6 relativ großflächig seitlich abgestützt, und es kann sich auch bei großer Krafteinwirkung auf den Arbeitsabschnitt 6 einem Verbiegen widersetzen. (Bei einem nicht dargestellten Ausführungsbeispiel sind die Führungsflächen gewölbt bzw. angespitzt, so daß im wesentlichen eine linienförmige Führung erzielt wird.) Bei allen Ausführungsbeispielen arbeiten die Führungsflächen 32 gegen den unverzahnten Bereich des Werkzeuges 6, so daß Beschädigungen des sehr harten Keramikmaterials und auch der Werkzeugschneiden ausgeschlossen sind.

Um in jeder Stellung der Antriebseinheit 2 und insbesondere auch im verschwenkten Zustand (Gehrungsschnitt-Zustand) die beidseitige Führung des Sägeblattes 6 auf Sägetischhöhe beizubehalten, ist die Führungseinrichtung 16 mit ihren Stabilisierungselementen 30, 30' relativ zum Sägetisch 1 gleichachsig oder parallelachsig die die Antriebseinheit 2 verschwenkbar angeordnet. Dies bedeutet, daß die Führungseinrichtung die Schwenkbewegung des Antriebsaggregates mitmachen kann, so daß auch in den verschwenkten Zuständen eine parallele, flächige Anlage der Führungsflächen 32 an den Sägeblattflanken 31, 31' vorhanden ist, ohne daß es dabei zu Verspannungen kommt. Die Führungseinrichtung 16 ist an der Antriebseinheit 2 angeordnet und zusammen mit dieser gegenüber dem Sägetisch 1 verschwenkbar.

Es versteht sich, daß der Einfachheit halber hierbei die Schwenkachsen der Antriebseinheit 2 und der Führungseinrichtung 16 zusammenfallen, beim Ausführungsbeispiel sind diese Achsen in der Schwenkachse 21 vereinigt, die in der Laufsohlenebene verläuft, was die bereits oben erwähnten Vorteile hat. Diese gemeinsame Schwenkachse 21 kann bei anderen Ausführungsbeispielen, die nicht dargestellt sind, auch im Abstand zur Laufsohlenebene oberhalb oder unterhalb dieser angeordnet sein, von Vorteil ist es, wenn sich die Höhenlage dieser Schwenkachse insbesondere stufenlos verstellen läßt. Dadurch ist es möglich, die Schwenkachse 21 immer so zu positionieren, daß sie unmittelbar in der Werkstück-Oberfläche verläuft, so daß beim Verschwenken der Antriebseinheit 2 das Werkzeug 6 keinen seitlichen Versatz an der Werkstück-Oberfläche ausführt.

Wie die Figuren 1 bis 4 zeigen, besitzt die Führungseinrichtung 16 eine Halterung 33 für die Stabilisierungselemente 30, 30', die fest an dem Motorkopf 3 angebracht ist. Sie ist vorteilhafterweise einstückig mit einem lösbaren Gehäuseteil 34 - im Beispiel einem Getriebedeckel - der Antriebseinheit 2 ausgebildet und bildet zusammen mit diesem eine als Gußteil geformte Einheit.

Die Halterung 33 besteht im wesentlichen aus zwei Haltearmen 35, 35', die sich ausgehend vom Motorkopf 3 zum Sägetisch 1 hin erstrecken und in ihrem der Motorkopf 3 entgegengesetzten Endbereich 36 die Stabilisierungselemente tragen. Um dabei bis in unmittelbare Nähe der Laufsohle 8 zu gelangen, tauchen sie mit ihren den Führungsflächen 32 zugeordneten Endbereichen 36 in die Durchbrechung 7 des Sägetisches 1 ein.

Jeder Flankenseite 31,31' des Verkzeuges 6 ist ein Haltearm 35, 35' zugeordnet, der sich in Seitenansicht gemäß Fig. 2 gesehen im wesentlichen in Werkzeug-Längsrichtung von oben nach unten erstreckt und der in Vorderansicht gemäß Fig. 1 gesehen zum Werkzeug 6 hin abgekröpft bzw. abgewinkelt oder abgebogen ist. Jeder Haltearm besitzt daher zunächst eine Tragpartie 37, die sich ausgehend vom der Motorkopf 3 zugewandten Bereich im wesentlichen parallel und im Abstand zur zugeordneten Werkzeugflanke 31, 31' nach unten zum Sägetisch 1 hin erstreckt. In etwa auf Höhe des Aufsatzes 17 schließt sich eine im wesentlichen ebenfalls geradlinige Führungspartie 38 an, die schräg nach unten und zum Werkzeug hin verläuft und mit ihrem Endbereich 36 neben dem Werkzeug 6 unmittelbar oberhalb der Laufsohle 8 endigt.

Die Abkröpfung der beiden Haltearme 35, 35' ist beim Ausführungsbeispiel erforderlich, um den möglichen maximalen Schwenkwinkel der Antriebseinheit 2 nicht unnötig zu begrenzen. Einen weiteren Beitrag, um einen möglichst großen Verschwenkbereich zur Verfügung zu haben, liefern auch zwei jeweils einem der Haltearme 35, 35' zugeordnete Ausnehmungen 39, die jeweils unterhalb des zugeordneten Haltearmes von oben her in den Sägetisch 1 eingebracht sind. Nach innen, zur Durchbrechung 7 hin, sind sie offen. Sie erstrecken sich quer zur Vorschubrichtung 20, und ihre in Vorschubrichtung gemessene Breite ist etwas größer als die entsprechend gemessene Breite des jeweiligen Haltearmes insbesondere im Bereich seiner Führungspartie 38. Wird nun die Antriebseinheit 2 geschwenkt, so kann der jeweils zuunterst angeordnete Haltearm 35 bzw. 35' in die zugeordnete Ausnehmung 39 einlauchen.

Beim Ausführungsbeispiel nehmen die beiden Führungspartien 38 der Haltearme in der Ausgangsstellung (Geradschnitt-Stellung) bezüglich der Laufsohle 8 eine Winkelstellung von ca. 45° ein. Damit kann die Antriebseinheit 2 um die Schwenkachse 21 um ca. 45° nach beiden Seiten verschwenkt werden, und zwar jeweils so weit, bis die Längsachsen der jeweils zuunterst liegenden Führungspartie im wesentlichen parallel zur Laufsohlenebene 8 verläuft, in welchem Zustand sie auf dem Grund 40 der jeweiligen Ausnehmung 39 aufliegt. Letztere ist in ihrem der Durchbrechung 7 entgegengesetzten Bereich nach oben hin angeschrägt, so daß auch die Tragpartie 37 teilweise eintauchen kann. In Fig. 1 ist bei 41 gestrichelt die von einem Haltearm eingenommene Position abgebildet, wenn sich die Antriebseinheit 2 in einer Schwenkstellung befindet, in der sich die Werkzeugebene 15 in der Position b befindet.

Zur Anpassung des zwischen den einander gegenüberliegenden Führungsflächen 32 der Stabilisierungselemente 30, 30' bestehenden Spaltes an die jeweilige Werkzeugdicke sind die Stabilisierungselemente 30, 30' im wesentlichen quer zur Vorschubrichtung zum Werkzeug hin und von diesem weg verstellbar sowie in den jeweiligen Stellungen lösbar feststellbar am zugeordneten Haltearm angeordnet. Gemäß Figuren 3 und 4 sitzt hierzu das jeweilige Stabilisierungselement 30, 30' an einem Führungsschlitten 40 - es kann sich hierbei um eine lösbare oder unlösbare Befestigungsart handeln -, und der Führungsschlitten 40 ist an der Führungspartie 38 in Richtung zur zugewandten Werkzeugflanke 31 bzw. 31' hin bzw. in Gegenrichtung verschiebbar geführt. Das Stabilisierungselement ist an der dem Werkzeug 6 zugewandten Schlittenseite 44 angebracht. Die Führungspartie 38 ist in Längsrichtung von einer T-förmigen Führungsnut 45 durchzogen - es kann sich hier auch beispielsweise um eine Schwalbenschwanznut handeln -, in der der im wesentlichen klotzartige Schlitten 40 mit einer komplementären Verschiebepartie 46 längsverschieblich einsitzt. Im Bereich des Endes 44 weist der Schlitten 40 eine verringerte Höhe auf, und in diesem Bereich befindet sich am Nutgrund der Führungsnut 45 eine Erhebung 47, auf die die dem Werkstück 6 abgewandte Schlittenpartie 43 zur Verschiebeweg-Begrenzung auflaufen kann. Der Führungsschlitten 40 ist daher von außen her in die Führungsnut 45 einschiebbar und nach unten hin gegen ein Herausfallen gesichert.

Im eingesetzten Zustand des Führungsschlittens 40 wird das vom Werkzeug 6 wegweisende axiale Ende der Führungsnut 45 lösbar mit einem Stellschraubenträger 48 verschlossen, der einen Gewindedurchgang aufweist , in dem sich eine Stellschraube 4 9 in Verschieberichtung des Schlittens 40 hin und her schrauben läßt. Diese arbeitet gegen die Schlittenrückseite, wodurch sich das am Schlitten befestigte Stabilisierungselement 30 bzw. 30' im Bereich des Sägetisches bzw. in der Durchbrechung 7 des Sägetisches gegen das Werkzeug vorspannen läßt. Der Träger 48 ist insbesondere an die Tragpartie 37 angeschraubt.

Um einen Werkzeugwechsel 6 zu erleichtern, kann sich zwischen der Erhebung 47 und der gegenüberliegenden Verschiebepartie 43 bzw. 46 eine Feder 50, z.B, eine Schraubenfeder, abstützen, die den Schlitten 40 beim Lösen der Stellschraube 49 vom Werkzeug 6 wegdrückt.

Beim in den Figuren 1 bis 4 beschriebenen Ausführungsbeispiel, bei dem die Verschieberichtung der Stabilisierungselemente 30, 30' schräg und insbesondere unter einem Winkel von ca. 45° zur Werkzeugebene 15 erfolgt, besitzen die Stabilisierungselemente einen im wesentlichen parallelogrammartigen Querschnitt, wobei die eine Seite die jeweilige Führungsfläche 32 bildet, die nunmehr beim Verstellen des Führungsschlittens 40 unter Beibehaltung ihrer parallelen Lage zur zugeordneten Werkzeugflanke 31 bzw. 31' verschiebbar ist.

Bei einer nicht dargestellten Ausführungsform ist vorgesehen, daß die Stabilisierungselemente direkt am Halter bzw. an den Haltearmen fest angebracht sind. Zusätzlich kann man hierbei vorsehen, die Halter bzw. Haltearme verstellbar an der Antriebseinheit anzubringen, so daß auf diesem Wege eine Justierung möglich ist.

Bei der in den Figuren 5 bis 7 abgebildeten Ausführungsform der Führungseinrichtung 16 ist die Führungspartie 38 der Haltearme 35 bzw. 35' an der Stirnseite der Endpartie 36 parallel zur Laufsohlenebene 8 abgeflacht (bei 53), und an diese Abflachung ist von unten her ein Führungsschlitten 40' angesetzt, der die Führungspartie 38 an ihren in Vorschubrichtung gesehen einander entgegengesetzten Seiten mit zwei Führungsrändern 54 geringfügig überlappt. Dadurch ist der Führungsschlitten 40' rechtwinkelig zur Werkzeugebene 15 und - im unverschwenkten Zustand der Antriebseinheit 2 - in einer zur Laufsohlenebene 8 parallelen Ebene verschiebbar geführt (gemäß Pfeil 55). Der Schlitten 40' weist ein sich in Verschieberichtung 55 erstreckendes Langloch 56 auf, durch das eine Klemmschraube 57 hindurchgreift, die in die Führungspartie 38 einschraubbar ist. In den Schlitten 40' ist das Stabilisierungselement 30 bzw. 30' integriert. Bei dieser Ausführungsform lassen sich demnach die Führungsschlitten 40', die eigentlich lediglich in gewissen Grenzen verschiebbare Halteteile sind, von unten her durch die Durchbrechung 7 hindurch an die beiden Führungspartien 38 lösbar anschrauben, und im gelösten Zustand der Klemmschrauben 57 lassen sich die vom Schlitten getragenen Stabilisierungselemente gegenüber dem Werkzeug 6 justieren.

An ihrer der Laufsohle 8 zugewandten, vom Werkzeug 6 wegweisenden Kante sind die Führungsschlitten 40' abgeschrägt (bei 58), zweckmäßigerweise derart, daß die Abschrägung parallel zur Längsrichtung der zugeordneten Führungspartie 38 verläuft, so daß die Schlitten 40' im verschwenkten Zustand nicht über die Laufsohle 8 vorstehen.

Es versteht sich, daß die beschriebene Form der Haltearme nicht zwingend vorgeschrieben ist, ihre jeweilige Form muß allerdings gewährleisten, daß die von ihnen getragenen Stabilisierungselemente im Nachbarbereich der Laufsohle 8 angeordnet sind, daß beim Verschwenken der Antriebseinheit die Haltearme den Schwenkwinkel nicht unnötigerweise begrenzen, indem sie an einer Partie des Sägetisches anschlagen und daß die Haltearme eine genügend hohe Stabilität aufweisen, um die Stabilisierungselemente abstützen zu können. Das Bestreben sollte weiterhin sein, die Ausnehmung 39 so klein wie möglich zu halten, um die Stabilität des Sägetisches nicht unnötig zu reduzieren.

Die erfindungsgemäße Führungseinrichtung weist auäërdem eine pendelnd gelagerte Stützrolle auf, die zur Werkzeugabstützung und evtl. zur Erzeugung eines Pendelhubes auf die Werkzeugrückseite einwirkt.

## Patentansprüche

1. Stichsäge mit einem mit einer Laufsohle (8) auf einem zu bearbeitenden Werkstück aufzulegenden Sägetisch (1), mit einem in einem Motorkopf (3) untergebrachten Antriebsaggregat und einem durch das Antriebsaggregat periodisch bewegbaren Werkzeughalter (5) mit einem endseitig einspannbaren Sägeblatt (6), wobei der Motorkopf (3), das Antriebsaggregat und der Motor (4) eine Antriebseinheit (2) bilden, die mit dem Sägeblatt (6) am Sägetisch (1) diesem gegenüber verschwenkbar bzw. in Vorschubrichtung gesehen seitlich verkippbar gelagert ist, sowie mit einer Einrichtung (16) zur Führung und Abstützung des Sägeblattes (6), die zwei das Sägeblatt (6) im unteren Endbereich etwa in Höhe des Sägetisches (1) von beiden Seiten flankierende und es zwischen sich aufnehmende Haltearme (35, 35') mit seitlich führenden, annähernd in der Ebene des Sägetisches (1) von beiden Seiten am Sägeblatt (6) anliegenden Stabilisierungselementen (30, 30') und eine pendelnde und gegen die Sägeblattrückseite anliegende Stützrolle enthält, die an einem am Motorkopf (3) gehalterten Stützrollenhalter mit einer zur Sägeblattebene rechtwinkligen Achse gehaltert ist, dadurch gekennzeichnet, daß die Haltearme (35, 35') in Vorderansicht der Stichsäge gesehen mit Abstand zum Sägeblatt (6) fest am Motorkopf (3) angebracht sind und sich ebenfalls in Vorderansicht gesehen, ausgehend vom Motorkopf (3) abgekröpft, abgewinkelt oder abgebogen zum Sägetisch (1) hin erstrecken und an ihrem dem Motorkopf (3) entgegengesetzten freien Endbereich (36) die Stabilisierungselemente (30, 30') tragen, so daß das Sägeblatt (6) auch im verschwenkten Zustand durch die Stabilisierungselemente (30, 30') beidseits abgestützt ist, wobei sich die Stabilisierungselemente (30, 30') in einer beim Verschwenken des Sägeblattes (6) das Eintauchen der Haltearme (35, 35') gestattenden Ausnehmung (7, 39) des Sägetisches (1) befinden.

2. Stichsäge nach Anspruch 1, dadurch gekennzeichnet, daß die Haltearme (35,35') einstückig mit dem vorderen Gehäuseteil (34) des Motorkopfs (3) ausgebildet sind und ausgehend vom vorderen Gehäuseteil (34) sich in Richtung zum Sägeblatt (6) hin bis unmittelbar oberhalb der Laufsohle (8) erstrecken.

3. Stichsäge nach Anspruch 1 oder 2, dadurch gekennzeichnet, daß die Ausnehmung (7,39), im Sägetisch (1) Raum läßt für einen Schwenkwinkel der Haltearme (35,35') von jeweils mindestens 45°.

4. Stichsäge nach einem der Ansprüche 1 bis 3, dadurch gekennzeichnet, daß die Stabilisierungselemente (30,30') jeweils an einem Führungsschlitten (40,40') vorzugsweise lösbar angebracht sind, der am jeweiligen Haltearm (35,35') im wesentlichen quer zur Vorschubrichtung verschiebbar geführt ist.

5. Stichsäge nach einem der Ansprüche 2 bis 4, dadurch gekennzeichnet, daß die beiden abgekröpften Haltearme (35,35') jeweils eine von dem der Antriebseinheit (2) zugeordneten Bereich ausgehende und sich in Richtung zum Sägetisch (1) nach unten hin erstreckende Tragpartie (37) sowie eine sich daran anschließende, im unverschwenkten Zustand der Antriebseinheit (2) insbesondere unter einem Winkel von ca. 45° mit Bezug auf die Laufsohlenebene (8) schräg nach unten und zum Werkzeug (6) hin verlaufende Führungspartie (38) aufweisen, an der die zugehörigen Stabilisierungselemente (30,30') bzw. die Führungsschlitten (40,40') zweckmäßigerweise verstellbar angeordnet sind.

## Claims

1. A compass saw with a saw table (1) for placing on a workpiece to be machined by means of a base plate (8), with a drive assembly housed in a motor head (3) and a tool holder (5) with a saw blade (6) which can be clamped at the end for periodic movement induced by the drive assembly, wherein the motor head (3), the drive assembly and the motor (4) form a drive unit (2) which is mounted with the saw blade (6) on the saw table (1) with swivelling facility relative to the latter, and tiltable in the feed direction viewed from the side, and with a device (16) for the guidance and support of the saw blade (6), comprising two retaining arms (35, 35') flanking the saw blade (6) on either side and holding it between them at its lower end at approximately the level of the saw table (1), with laterally guiding stabilizing elements (30, 30') in contact with the saw blade (6) on either side approximately in the plane of the saw table (1), and with a floating support roller contacting the back of the saw blade and mounted on a support roller mount fitted to the motor head (3) and having an axis at right-angles to the saw blade plane, characterized in that the retaining arms (35, 35') in a front view of the compass saw are attached securely to the motor head (3) with clearance from the saw blade (6) and, also in a front view, are bent, angled or curved as they extend from the motor head (3) towards the saw table (1), and support the stabilizing elements (30, 30') at their free end section (36) opposite the motor head (3), so that the saw blade (6) is supported on both sides by the stabilizing elements (30, 30') even in its swivelled state, while the stabilizing elements (30, 30') are positioned in a recess (7, 39) of the saw table (1) which allows the retaining arms (35, 35') to dip during swivelling of the saw blade (6).

2. A compass saw according to claim 1, characterized in that the retaining arms (35, 35') are integral with the front part (34) of the housing of the motor head (3), and extend from the front part (34) of the housing towards the saw blade (6) to terminate immediately above the base plate (8).

3. A compass saw according to claim 1 or 2, characterized in that the recess (7, 39) in the saw table (1) leaves enough room for a pivoting angle of at least 45° for the retaining arms (35, 35').

4. A compass saw according to any of claims 1 to 3, characterized in that the stabilising elements (30, 30') are preferably detachably mounted on guide blocks (40, 40') guided at the respective retaining arms (35, 35') for traversing substantially at right angles to the direction of feed.

5. A compass saw according to any of claims 2 to 4, characterized in that each of the two retaining arms (35, 35') has a supporting section (37) extending from the area associated with the drive unit (2) towards the saw table (1) followed by a guide section (38) extending diagonally downwards, in particular enclosing an angle of approximately 45° with the plane of the base plate (8), and towards the tool (6) while the drive unit (2) is in its non-pivoted state, on which guide section the associated stabilising elements (30, 30') or guide blocks (40, 40') are suitably mounted to be capable of adjustment.

## Revendications

1. Scie sauteuse comportant une table de sciage (1) avec une semelle (8) à placer sur une pièce à usiner, comportant un ensemble d'entraînement logé dans une tête de moteur (3) et un porte-outil (5), déplaçable périodiquement par l'ensemble d'entraînement avec une lame de scie (6) à serrer d'un côté, la tête de moteur (3), l'ensemble d'entraînement et le moteur (4) formant une unité d'entraînement (2), qui est montée avec la lame de scie (6) sur la table de sciage (1), de manière à pouvoir pivoter par rapport à celle-ci ou à basculer latéralement, vue dans le sens de l'avance, comportant aussi un dispositif (16) de guidage et d'appui de la lame de scie qui comprend deux bras de maintien (35, 35'), situés de part et d'autre de la lame de scie (6) et la logeant entre eux, dans sa région terminale inférieure, sensiblement à hauteur de la table de sciage (1), avec des éléments de stabilisation (30, 30') assurant le guidage latéral, s'appliquant sur les deux côtés de la lame de scie (6) sensiblement dans le plan de la table de sciage (1), ainsi qu'un galet d'appui, monté oscillant et s'appliquant contre la face arrière de la lame de scie, galet qui est monté sur un support de galet d'appui porté par la tête de moteur (3), avec un axe perpendiculaire au plan de la lame de scie, caractérisée en ce que les bras de maintien (35, 35') sont, vus par l'avant de la table de sciage, fixés à distance de la lame de scie (6), sur la tête de moteur (3), et en ce que ces bras, également vus par l'avant, s'étendent depuis la tête de moteur (3) vers la table de sciage (1) en étant coudés, pliés ou courbés, et en ce que, dans la région de leur extrémité libre (35) opposée à la tête de moteur (3), ces bras portent les éléments de stabilisation (30, 30'), de telle sorte que, même à l'état pivoté, la lame de scie (6) est soutenue des deux côtés par les éléments de stabilisation (30, 30'), ces éléments se situant dans un évidement (7, 39) de la table de sciage (1) permettant l'engagement des bras de maintien (35, 35') lors du pivotement de la lame de scie (6).

2. Scie sauteuse selon la revendication 1, caractérisée en ce que les bras de maintien (35, 35') sont réalisés d'une seule pièce avec la partie de boîtier avant (34) de la tête de moteur (3) et, partant de la partie de boîtier avant (34), s'étendent en direction de la lame de scie (6), jusque directement au-dessus de la semelle (8).

3. Scie sauteuse selon la revendication 1 ou 2, caractérisée en ce que l'évidement (7, 39), pratiqué dans la table de sciage (1), laisse de la place pour un angle de pivotement respectif des bras de maintien (35, 35') de 45° au minimum.

4. Scie sauteuse selon l'une des revendications 1 à 3, caractérisée en ce que les éléments de stabilisation (30, 30') sont appliqués chacun, de préférence de façon amovible, contre un chariot de guidage (40, 40') qui est guidé en coulissement sur le bras de maintien (35, 35') respectif, sensiblement transversalement à la direction d'avance.

5. Scie sauteuse selon l'une des revendications 2 à 4, caractérisée en ce que les deux bras de maintien (35, 35') coudés comportent chacun une partie de support (37), partant de la zone associée à l'unité d'entraînement (2) et s'étendant vers le bas, en direction de la table de sciage (1), ainsi qu'une partie de guidage (38) se raccordant à la première, s'étendant obliquement vers le bas à l'état non pivoté de l'unité d'entraînement (2), notamment sous un angle de 45° environ par rapport au plan de la semelle (8) et s'étendant vers l'outil (6), partie de guidage sur laquelle les éléments de stabilisation (30, 30') correspondants ou les chariots de guidage (40, 40') sont placés de manière avantageusement réglable.
